(19) **Europäisches Patentamt / European Patent Office / Office européen des brevets**

(11) **EP 4 475 425 A1**

(12) **EUROPEAN PATENT APPLICATION**

(43) Date of publication:
**11.12.2024 Bulletin 2024/50**

(21) Application number: **23177522.2**

(22) Date of filing: **06.06.2023**

(51) International Patent Classification (IPC):
***H02P 21/18*** *(2016.01)*

(52) Cooperative Patent Classification (CPC):
**H02P 21/18; H02P 21/13;** H02P 2101/15

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Gamesa Renewable Energy A/S**
**7330 Brande (DK)**

(72) Inventors:
• **Freire, Nuno Miguel Amaral**
**3150-109 Condeixa (PT)**
• **Wu, Ximeng**
**Wei Hai City, Shan Dong Province 264200 (CN)**
• **Zhu, Ziqiang**
**Sheffield S10 5TR (GB)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **DETERMINING AN ELECTRICAL ROTOR POSITION FOR AN ELECTRICAL MACHINE**

(57) It is described a method of determining an electrical rotor position value (101) of an electrical, in particular permanent magnet, synchronous machine (1361) having a stator (1362) with stator windings, the method comprising: using a current model (110) of the machine, to calculate an error (105a,b) of a current for at least one candidate value (103) of the electrical rotor position; assessing the candidate value (103) using a cost function (g_CM1, g_CM2); and defining the actual electrical rotor position value (101) based on the assessment.

FIG 1

**Description**

Field of invention

The present invention relates to a method and a corresponding arrangement of determining an electrical rotor position value of an electrical synchronous machine having a stator with stator windings. Further, a method for controlling the electrical machine is provided. Still further, an electrical synchronous machine system is provided as well as a wind turbine comprising the electrical synchronous machine system.

Art Background

For controlling a permanent magnet synchronous machine, in particular using vector control, the rotor electrical position may be required. The rotor electrical position may be required for transforming current measurements and voltage measurements or voltage reference quantities to a rotating reference frame which is denoted as a dq reference frame. Also, the rotor electrical position may be required for a back transformation into the stationary reference frame.

The rotor electrical position may conventionally be obtained using different approaches. In one approach, current measurements and/or voltage measurements or voltage reference values are utilized in a set of equations, in order to calculate the rotor electrical position. This methodology may also be referred to as sensorless determination of the electrical rotor position.

For sensorless control of permanent magnet synchronous machines (PMSMs), a back electromotive force (back-EMF) based position observer is conventionally used to obtain the rotor position information. A phase-locked loop (PLL) based position observer has been widely used since it is simple and easy to implement. However, the dynamic performance of the conventional PLL based position observer may not be satisfactory. In wind turbine applications, a high-performance position observer is key for adequate generator control and active drive train damping.

Conventional observers have been adopted for wind turbine applications, and their performance limitations accommodated by changes to control algorithms and demanding tuning of control parameters.

A so-called finite-position-set (FPS) position observer for the back-EMF based sensorless control was proposed. A finite set of rotor positions are evaluated and the optimal one is selected by minimizing a designed cost function. This type of observer can provide a better dynamic than conventional PLL based position observers. Simulation studies showed bandwidth can be higher than that of the conventional observers. However, there are several drawbacks found in the state-of-the-art.

The conventional methods may be based on a voltage model of the permanent magnet synchronous machine. According to this voltage model conventionally used, the calculation of a current derivative is necessary which however introduces a lot of high-frequency harmonics and noises.

Further, a conventionally used cost function only enables to determine an electrical rotor position having an ambiguity, since also a position estimation of error of 180° typically leads to a minimum of a conventional cost function. Thereby, errors in the estimation of the electrical rotor position of 180° or a multiple of 180° are observed which may degrade the control performance of the electrical machine.

Thus, there may be a need for a method and a corresponding arrangement of determining an electrical rotor position value of an electrical synchronous machine, wherein at least some of the above-mentioned problems or disadvantages are mitigated. Further there may be a need for a method of controlling an electrical synchronous machine, wherein the control is improved and the method may be implemented in a simple manner not requiring extensive complexity of the system.

Summary of the Invention

According to an embodiment of the present invention, it is provided a method of determining an electrical rotor position value of an electrical, in particular permanent magnet, synchronous machine having a stator with stator windings, the method comprising: using a current model of the machine, to calculate an error of a (stator) current for at least one candidate value of the electrical rotor position; assessing the candidate value using a cost function; and defining the actual electrical rotor position value based on the assessment.

The method may be implemented in software and/or hardware and may in particular be performed by a controller of the electrical machine, in particular a wind turbine controller. The method may be applied to a wind turbine generator.

The electrical rotor position value defines the rotor position in an electrical angle which is related to the mechanical or azimuthal rotor position or angle position by an equation comprising the number of pole pairs. The electrical rotor position value may be proportional to the mechanical rotor position or rotor azimuthal angle. The electrical rotor position value may be required for appropriately controlling the electrical machine in particular for vector control. The electrical rotor position value may be utilized for transforming electrical quantities, like currents or voltages, from a stationary coordinate frame to a synchronously rotating reference frame (dq-frame, synchronously rotating with the rotor) and the electrical rotor position value may as well as be utilized for back transformation of d-, q-components of electrical quantities to components of a stationary coordinate system.

The current model may be provided using a set of equations, for example linear equations which relate the current (in particular two components of the current, for example components of an dq-frame or components of an alpha-beta-frame) at a present time instance to components of the currents and also components of voltages as pertaining to a previous time instance.

Conventionally a voltage model of the electrical machine may have been utilized to provide a determination of the electrical rotor position. In conventional methods, a so-called EMF-observer may have been implemented or utilized.

Embodiments of the present invention may also require or comprise to estimate the back-EMF (back-electromagnetic force) using a voltage model including a set of equations. However, additionally the current model is utilized which has particular advantages regarding the accuracy and/or reliability of the determination of the electrical rotor position. For example a calculation of a current derivative may not be necessary any more at least may not be necessary to calculate current errors.

Furthermore, when the current model is utilized, advantageously a cost function can be designed which will not introduce an ambiguity in the determination of the electrical rotor position. When the determined electrical rotor position value is utilized for controlling the electrical machine, the reliability and accuracy of the determined electrical rotor position value may be improved thereby consequently also improving the control of the machine.

According to embodiments of the present invention, not only one candidate value but plural candidate values are assessed using the cost function. In the most general variant however the method is only applied to a single candidate value and enables to assess a pre-given candidate value.

According to an embodiment of the present invention, the method further comprises providing plural candidate values for the electrical rotor position; providing current component values and voltage component values relating to the stator windings; calculating, using the current model of the machine, in particular using a set of equations (e.g. eq.(11, 12;15, 16)), for each of the candidate values, associated components (e.g. d- and q-component or alpha-, beta-components) of the error of a (stator) current based on the plural current component values and plural voltage component values; providing the cost function being a real valued function of the components of the error of the current; assessing the candidate values using the cost function; and defining the actual electrical rotor position value based on the assessment.

The plural candidate values may for example be selected or defined to be within an interval of 0° to 360° such that they for example are evenly spaced from each other to cover the entire angle range of 360°. Those candidate values may be considered to represent initial candidates values. Embodiments of the present invention involve to cyclicly or iteratively calculate in each cycle or iteration step an associated set of candidate values which may be based on the previous candidate values which have been assessed by the cost function. The candidate values of subsequent iteration cycles may span a smaller and smaller angle range such that an angle range covered by candidate values of a subsequent cycle or iteration step is smaller than an angle range of the candidate values of a previous iteration step or cycle. Thereby, the accuracy of the determination of the rotor position value may be improved from step to step.

The current component values and voltage component values may relate to or may be or represent the currents and voltages carried in or be generated at the stator windings. The current component values and/or voltage component values may for example be given in an alpha-beta stationary frame. The components in the alpha-beta stationary frame may be calculated by transforming the phase currents in particular the three phase currents in the a-, b-, c-frame using known transformation matrices.

The error of the stator current may relate to a particular time instance and the method may continuously be performed for plural subsequent time instances. The error of the stator current may relate or may be a difference between for example a measured current component and a predicted current as calculated using the current model both relating for the same time instance.

The current model may require as input the current component values and voltage component values (in particular relating to a previous time instance). The error of the stator current may be evaluated using the cost function which may in particular be a function of the error of the stator current, in particular a function of two components of the error of the stator current. The function value of the cost function to which the cost function evaluates for a particular stator current error input may enable to test or assess the respective candidate value (of the rotor position) which is associated to the respective error of the stator current. Assessing the candidate values may for example involve to compare the respective function values of the cost function and for example selecting one or more of those candidate values which evaluate to one or more smallest cost function values.

As has been mentioned above, embodiments of the present invention are not restricted to a fixed set of plural (initial) candidate values, but may generate during performing the method multiple sets of candidate values which more and more limit candidate values to smaller and smaller angle ranges. The final actual electrical rotor position value is then selected or defined to be within the last stated angle range, as defined by the width or span of the last set of candidate values.

According to an embodiment of the present invention, the current model enables to calculate predicted current components at a time instance (e.g. k) based on the provided current components at a previous time instance (e.g. (k-1)), the provided voltage components at the previous time instance and an estimated back-EMF at the time instance, wherein for calculating the estimated back-EMF a voltage model is used.

The predicted current components may for example be or comprise the current components in the alpha-beta frame. The same components may be utilized for the voltage and also for the back-EMF. The back-EMF may be calculated using one or more equations of a voltage model. The back-EMF may for example be calculated to depend on the current component values, a magnet flux of the permanent magnets and for example a rotational speed of the rotor. Further, the inductances along the d-axis and the q-axis may be utilized for calculating the back-EMF.

According to an embodiment of the present invention, the cost function has a single minimum for an error of the electrical rotor position value being zero. When the error of the electrical rotor position is for example pi or a multiple of pi, the cost function may have a value which is different from the single minimum value.

The cost function may have the property that it evaluates two different values if the error of the respective tried candidate value from the true rotor position value is zero or (a multiple of) pi. The cost function in particular may have only a minimum when the error of the electrical rotor position value is 0 and may have a larger value if the error of the electrical rotor position value is pi or a multiple of pi. Thereby, the ambiguity of the determination of the electrical rotor position value may be avoided which may in particular be exploited during control of the electrical machine. Thereby control of the electrical machine may be improved.

According to an embodiment of the present invention, the cost function depends on one of: a d-component and a q-component of the error of the current, in particular a sum of squares of those error components; a alpha-component and a beta-component of the errors of the current, in particular a sum of squares of those error components (see e.g. eq. (13, 17) below).

When the cost function depends on for example the d-component and the q-component or the alpha-component and the beta-component of the error of the current, the cost function may be designed or established to avoid an ambiguity of the determination of the electrical rotor position, as observed in conventional methods, for example utilizing a voltage model. Thereby, the accuracy of the determination may be improved.

According to an embodiment of the present invention, the error of the current depends on a difference of the provided current and a current estimated or predicted based on the respective candidate value of the electrical rotor position using the current model.

Thereby, a simple implementation and definition of the cost function may be provided, simplifying the method. The provided current may for example relate to measured current provided for the different component, for example alpha- and beta-components of a measured current.

According to an embodiment of the present invention, defining a value as the actual electrical rotor position value based on the assessment comprises: defining a value as the actual electrical rotor position value, in particular in an iterative fashion, to be within an interval limited by those two candidate values in each iteration step which lead to two minimal values of the cost function.

Thereby, an improved searching strategy may be provided. The set of candidate values of the electrical rotor position values may be subject to change in each iteration cycle, thereby, restricting the candidate values to a range which has a dynamically diminished width in each iteration cycle. The final electrical rotor position then lies in the smallest angle interval reached when the iteration is terminated. By this methodology, the number of iterations may be kept in acceptable ranges, while the accuracy of the determination of the electrical rotor position may be satisfactory.

According to an embodiment of the present invention, selecting a value as the actual electrical rotor position value based on the assessment comprises: a first stage in which two candidate values from plural initial candidate values, in particular evenly distributed in an angle interval having width of 360°, are selected which lead to the two smallest values of the cost function; a second stage, in which it is iteratively performed: determining a mid position between the two previous candidate values; selecting, among the two previous candidate values and the mid position, those two as next candidate value which result in the two smallest cost function values.

Thereby, a detailed implementation may be provided which may in a simplified manner be transferred to a software code implementing the iterative method.

According to an embodiment of the present invention, the iteration is terminated after a predetermined number of iterations and/or wherein the actual electrical rotor position value is set to this candidate value which evaluates to the smallest cost function value in the last iteration step.

The predetermined number of iterations may for example be between 5 and 20 or for example between 5 and 15 or may for example be 15. The number of initial candidate values may for example range between 5 and 20, in particular between 5 and 10, in particular being 6.

According to an embodiment of the present invention, the current component values and/or voltage component values are components in dq-frame or alpha-beta-frame; and/or wherein the current component values are measured values and/or the voltage component values are reference values; and/or the method further comprising controlling the electrical machine based on the determined rotor position value.

Thereby, several implementation variants may be provided and the control of the electrical machine may be improved. The voltage component values may also be measured values. It may, however, be assumed that the reference values of the voltages may correspond to the true voltage component values. Using the reference values may simplify the method. The current component values may for example be measured at the stator windings, e.g. by sensors which may conventionally be installed at the electrical machine.

According to an embodiment of the present invention, the electrical machine comprises a generator of a wind turbine. For a wind turbine generator it may be advantageous to utilize a sensor-less method for determining the electrical rotor position in order to simplify the construction, in particular not requiring for example an encoder or a magnetic field sensor or the like for determining or measuring the rotor position.

According to an embodiment of the present invention, it is provided a method of controlling an electrical, in particular permanent magnet, synchronous machine having a stator with stator windings, the method comprising: performing a method according to one of the preceding embodiments; controlling, in particular comprising vector control, the electrical machine based on the determined rotor position value.

During vector control, transformation of electrical quantities between different coordinate systems may be required. For example for a transformation and/or a back-transformation to or from a dq-coordinate frame synchronously rotating with the rotor, the electrical rotor position is required. When the accuracy of the determination of the electrical rotor position is improved, the vector control or in general the control of the machine may be improved.

It should be understood, that features, individually or in any combination, explained, applied, provided or described in the context of a method of determining an electrical rotor position value of an electrical synchronous machine, may also, individually or in any combination, applied, employed or provided for an arrangement for determining an electrical rotor position value of an electrical synchronous machine according to embodiments of the present invention and vice versa.

According to an embodiment of the present invention, it is provided an arrangement for determining an electrical rotor position value of an electrical, in particular permanent magnet, synchronous machine having a stator with stator windings, the arrangement comprising: a processor adapted: to use a current model of the machine, to calculate an error of a (stator) current for at least one candidate value of the electrical rotor position; to assess the candidate value using a cost function; and to define the actual electrical rotor position value based on the assessment.

The arrangement may be implemented in software and/or hardware. The arrangement may for example be a module or a portion of a wind turbine controller. The electronic storage may in particular comprise a storage area for storing one or more computer programs or code containing instructions which are configured to carry out at least portions of a method of determining the electrical rotor position value. The processor may have access to the electronic storage. The module providing the cost function may also partly be implemented in the electronic storage or may have access to the electronic storage. The cost function may also be stored as a data structure in the electronic storage.

Thereby, the arrangement may be adapted to carry out method of determining the electrical rotor position value as explained according to several or multiple embodiments according to the present invention above.

According to an embodiment of the present invention, the arrangement further comprises an electronic storage adapted to store plural candidate values for the electrical rotor position; a module providing the cost function being a real valued function of the components of the error of the current; an input port for receiving plural stator winding current component values and plural stator winding voltage component values; wherein the processor is adapted to calculate, using a current model of the machine, in particular using a set of equations (e.g. eq.(11, 12;15, 16) below), for each of the candidate values, associated components (e.g. d- and q-component or alpha, beta) of an error of a (stator) current based on the plural current component values and plural voltage component values; the processor being further adapted: to assess the candidate values using the cost function; and to define the actual electrical rotor position value based on the assessment.

According to an embodiment of the present invention, it is provided an arrangement for determining an electrical rotor position value of an electrical, in particular permanent magnet, synchronous machine having a stator with stator windings, the arrangement comprising: an electronic storage adapted to store plural candidate values for the electrical rotor position; an input port for receiving plural stator winding current component values and plural stator winding voltage component values; a processor adapted to calculate, using a current model of the machine, in particular using a set of equations (e.g. eq.(11, 12;15, 16) below), for each of the candidate values, associated components (d- and q-component or alpha, beta) of an error of a (stator) current based on the plural current component values and plural voltage component values; a module providing a cost function being a real valued function of the components of the error of the current; the processor being further adapted: to assess the candidate values using the cost function; and to define the actual electrical rotor position value based on the assessment.

According to an embodiment of the present invention it is provided an electrical synchronous machine system, comprising: an electrical, in particular permanent magnet, synchronous machine having a rotor and a stator with stator windings; and an arrangement according to the preceding embodiment connected to receive measurement values of the electrical machine, in particular connected to control the electrical machine.

Furthermore, according to an embodiment of the present invention it is provided a wind turbine, comprising: a rotor hub having plural rotor blades mounted; an electrical synchronous machine system, whose rotor is coupled to the rotor hub.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates an arrangement for determining an electrical rotor position value of an electrical synchronous machine according to an embodiment of the present invention;

Fig. 2 illustrates a graph representing a cost function as employed according to embodiments of the present invention, e.g. in the arrangement illustrated in Fig. 1;

Fig. 3 schematically illustrates an arrangement for determining an electrical rotor position value of an electrical synchronous machine according to another embodiment of the present invention;

Fig. 4 illustrates a graph representing a cost function as employed according to embodiments of the present invention, e.g. in the arrangement illustrated in Fig. 3;

Fig. 5, 6, 7 illustrate simulation results of determined electrical rotor positions according to a conventional method and to a first and a second embodiment according to the present invention, respectively.

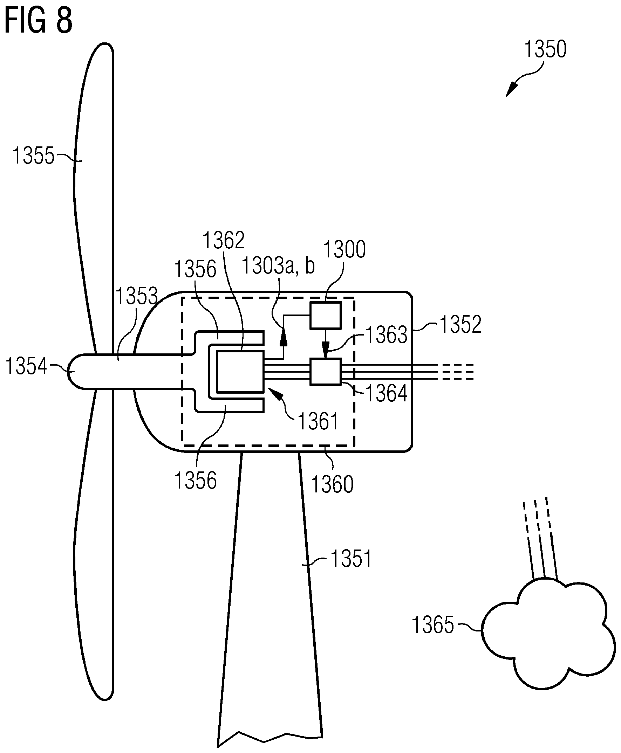

Fig. 8 schematically illustrates a wind turbine according to an embodiment of the present invention comprising an electrical synchronous machine system according to an embodiment of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

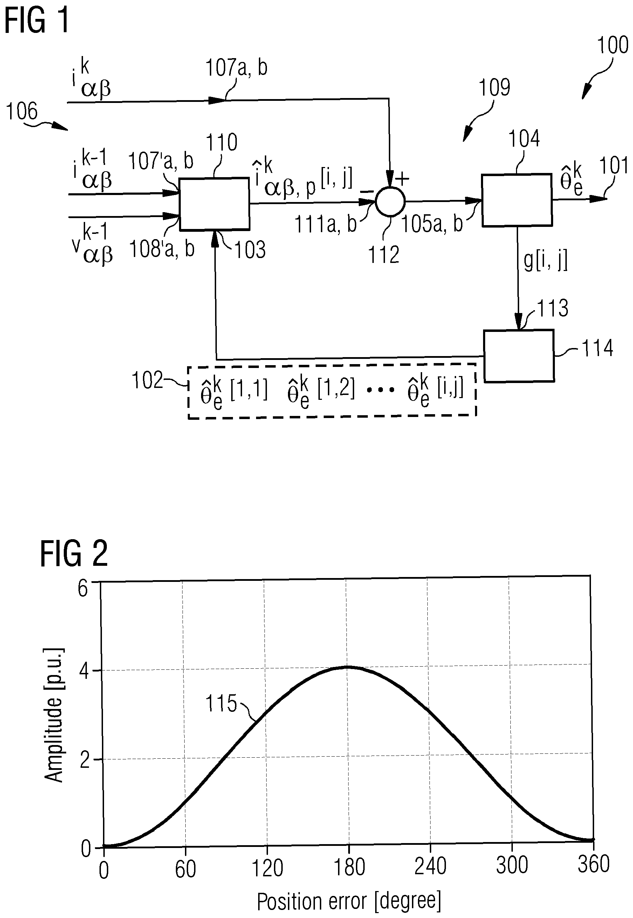

The arrangement 100 schematically illustrated in **Fig. 1** as a functional diagram for determining an electrical rotor position value $\Theta\_E$ (101) of an electrical synchronous machine comprises an electronic storage 102 adapted to store plural candidate values $\Theta\_e[i]$ (also labelled with reference sign 103). The arrangement further comprises a module 104 providing a cost function (g[i,j]) being a real-valued function of components (i,j; 105a,b) of the error of the current, the error of the currents labelled with reference sign 105a, 105b. The arrangement further comprises an input port 106 for receiving plural stator winding current component values 107a,b (for time instance k) , 107'a,b (for time instance k-1), and plural stator winding voltage component values 108'a,b (for time instance k-1).

The arrangement 100 further comprises a processor 109 which is adapted to calculate, using a current model of the machine, for each of the candidate values 103 associated components (for example in the d-q-frame) of the error 105a, 105b of a stator current based on the plural current component values 107a,b, 107'a,b and the plural voltage component values 108'a,b.

As can be appreciated from Fig. 1, the processor 109 receives the plural current component values 107a, 107b pertaining to a current time instance k as well as the current component values 107'a, 107'b, relating to a previous time instance (k-1) and further obtains the plural voltage component values 108'a, 108'b also relating to the previous time instance (k-1). The functional box 110 representing the current model implemented in the processor 109 outputs, based on the input values 107'a, 107'b, 108'a, 108'b predicted current components 111a, 111b of the stator currents for the current time instance k.

The arrangement 100 further comprises a difference element 112 to which the signals 107a, 107b and 111a, 111b are supplied, in order to derive the error components 105a, 105b, the stator current. The error components 105a, 105b are evaluated or assessed in a cost function block 104 which outputs the corresponding real-valued result g[i,j] (g has as two arguments the components of the current error), also labelled with reference sign 113.

In a searching strategy block 114 a new set of candidate values 103 is derived based on the assessment of the previous candidate values. Thereby, the arrangement 100 may carry out an iterative procedure, wherein in each cycle a value of the actual electrical rotor position value is defined to be within an interval limited by those two candidate values in each iteration step which lead to two minimal values of the cost function g. In a first stage of the iterative cycle or method two candidate values from the plural initial candidate values (for example stored in the storage 102) are selected which lead to the two smallest values of the cost function. In a second stage, which is iteratively performed, it is respectively determined a mid position between the two previous candidate values among the two previous candidate values and the mid position. Those two values are selected as next candidate values which result in the two smallest cost function values.

The current values i_a, i_b, i_c may be measured as phase currents of three phases of the stator windings. According to the following equations 1, 2 the three-phase currents may be transformed into a stationary alpha-beta frame for a synchronously rotating reference frame, the so-called d-q-frame:

$$\begin{bmatrix} i_\alpha \\ i_\beta \end{bmatrix} = \frac{2}{3} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} i_a \\ i_b \\ i_c \end{bmatrix}, \qquad \begin{bmatrix} v_\alpha \\ v_\beta \end{bmatrix} = \frac{2}{3} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} v_a \\ v_b \\ v_c \end{bmatrix} \qquad (1)$$

Then, they can be transformed into the rotating (dq-) reference frame by:

$$\begin{bmatrix} i_d \\ i_q \end{bmatrix} = \begin{bmatrix} \cos\theta_e & \sin\theta_e \\ -\sin\theta_e & \cos\theta_e \end{bmatrix} \begin{bmatrix} i_\alpha \\ i_\beta \end{bmatrix}, \qquad \begin{bmatrix} v_d \\ v_q \end{bmatrix} = \begin{bmatrix} \cos\theta_e & \sin\theta_e \\ -\sin\theta_e & \cos\theta_e \end{bmatrix} \begin{bmatrix} v_\alpha \\ v_\beta \end{bmatrix} \qquad (2)$$

The voltage equations of a PMSM in the rotating reference frame can be given by:

$$v_d = R_s i_d + L_d \frac{di_d}{dt} - \omega_e L_q i_q$$

$$v_q = R_s i_q + L_q \frac{di_q}{dt} + \omega_e L_d i_d + \omega_e \psi_m \qquad (3)$$

where $v_d$, $v_q$, $i_d$, $i_q$ are the stator voltages and currents in dq-axes, respectively, $R_s$ is the resistance, $L_d$ and $L_q$ are the d- and q- axis self-inductances, $\omega_e$ is the electrical rotor speed and $\Psi_m$ is the PM flux-linkage.

Considering a small sampling instance $T_s$, by using the forward Euler based method, the discrete-time domain voltage model at the kth sampling interval is expressed as:

$$v_d^k = R_s i_d^k + L_d \frac{i_d^{k+1} - i_d^k}{T_s} - \omega_e^k L_q i_q^k$$

$$v_q^k = R_s i_q^k + L_q \frac{i_q^{k+1} - i_q^k}{T_s} + \omega_e^k L_d i_d^k + \omega_e^k \psi_m \qquad (4)$$

In a sensorless control drive system, the real rotor position is unknown. Therefore, (4) is transformed into the estimated rotating reference frame as:

$$\hat{v}_d^k = R_s \hat{i}_d^k + L_d \frac{\hat{i}_d^{k+1} - \hat{i}_d^k}{T_s} - \omega_e^k L_q \hat{i}_q^k + \hat{E}_d^k$$

$$\hat{v}_q^k = R_s \hat{i}_q^k + L_d \frac{\hat{i}_q^{k+1} - \hat{i}_q^k}{T_s} + \omega_e^k L_d \hat{i}_d^k + \hat{E}_q^k \qquad (5)$$

$$\begin{bmatrix} \hat{E}_d^k \\ \hat{E}_q^k \end{bmatrix} = E^k \begin{bmatrix} -\sin\Delta\theta_e \\ \cos\Delta\theta_e \end{bmatrix}, E^k = \left(L_d - L_q\right)\left(\omega_e^k i_d^k - p i_q^k\right) + \omega_e^k \psi_m \tag{6}$$

where the superscript sign '^' indicates the variables in the estimated synchronous reference frame, $\Delta\theta_e$ is the position error between the real and the estimated rotor position. Moreover, (5) and (6) can be expressed in the stationary reference as:

$$v_\alpha^k = R_s i_\alpha^k + L_d \frac{i_\alpha^{k+1} - i_\alpha^k}{T_s} + \omega_e^k \left(L_d - L_q\right) i_\beta^k + E_\alpha^k$$

$$v_\beta^k = R_s i_\beta^k + L_d \frac{i_\beta^{k+1} - i_\beta^k}{T_s} - \omega_e^k \left(L_d - L_q\right) i_\alpha^k + E_\beta^k \tag{7}$$

$$\begin{bmatrix} E_\alpha^k \\ E_\beta^k \end{bmatrix} = E^k \begin{bmatrix} -\sin\theta_e \\ \cos\theta_e \end{bmatrix} \tag{8}$$

A specific search strategy is designed to effectively select the positions from a finite position set to calculate the back-EMFs in estimated rotating reference frame and then these back-EMFs are evaluated in the cost functions.

In the following, the current model applied according to embodiments of the present invention is explained with reference to a set of equations.

The measured current in stationary reference frame is represented as:

$$\begin{bmatrix} i_\alpha^k \\ i_\beta^k \end{bmatrix} = \begin{bmatrix} i_\alpha^{k-1} \\ i_\beta^{k-1} \end{bmatrix} + T_s \left\{ A \begin{bmatrix} i_\alpha^{k-1} \\ i_\beta^{k-1} \end{bmatrix} + B \left[ \begin{bmatrix} v_\alpha^{k-1} \\ v_\beta^{k-1} \end{bmatrix} - \begin{bmatrix} E_\alpha^{k-1} \\ E_\beta^{k-1} \end{bmatrix} \right] \right\}$$

$$A = \begin{bmatrix} -\dfrac{R_s}{L_d} & \dfrac{\omega_e^k \left(L_d - L_q\right)}{L_d} \\ -\dfrac{\omega_e^k \left(L_d - L_q\right)}{L_d} & -\dfrac{R_s}{L_d} \end{bmatrix}, B = \begin{bmatrix} \dfrac{1}{L_d} & 0 \\ 0 & \dfrac{1}{L_d} \end{bmatrix} \tag{10}$$

Then, the current in the next sampling instant can be predicted based on the current model of the PMSM using the measured current in the past sample instant, which is expressed by:

$$\begin{bmatrix} i_{\alpha,p}^k \\ i_{\beta,p}^k \end{bmatrix} = \begin{bmatrix} i_\alpha^{k-1} \\ i_\beta^{k-1} \end{bmatrix} + T_s \left\{ A \begin{bmatrix} i_\alpha^{k-1} \\ i_\beta^{k-1} \end{bmatrix} + B \left[ \begin{bmatrix} v_\alpha^{k-1} \\ v_\beta^{k-1} \end{bmatrix} - \begin{bmatrix} \hat{E}_\alpha^{k-1} \\ \hat{E}_\beta^{k-1} \end{bmatrix} \right] \right\} \tag{11}$$

With eqs.(10) and (11), the difference between the predicted current and measured current can be derived as:

$$\begin{bmatrix} i_{\alpha,p}^k \\ i_{\beta,p}^k \end{bmatrix} - \begin{bmatrix} i_\alpha^k \\ i_\beta^k \end{bmatrix} = T_s B E^k \begin{bmatrix} \sin\theta_r - \sin\hat{\theta}_r \\ \cos\theta_r - \cos\hat{\theta}_r \end{bmatrix} \tag{12}$$

Clearly, it can be seen that the current difference is proportional to the position error.

The functional block 110 illustrated in Fig. 1 may be adapted to carry out or apply the equation (11) given above.

The cost function module 104 may implement the cost function g as follows according to eq.(13):

$$g_{CM1} = \left(i_\alpha^k - i_{\alpha,p}^k\right)^2 + \left(i_\beta^k - i_{\beta,p}^k\right)^2 \tag{13}$$

Fig. 2 illustrates a curve 115 presenting the cost function g_cm1 of equation 13 in a coordinate system having an abscissa indicating the position error and having as an ordinate the amplitude of the cost function. The curve 115 representing the cost function of equation 13 has only a single minimum at the position error of 0°. Thus, using the cost function as defined in equation 13 in the cost function module 104 enables to an unambiguous determination of the electrical rotor position 101.

It should be appreciated that the arrangement 100 provides an embodiment of the present invention, wherein the currents are derived in the stationary alpha-beta reference frame.

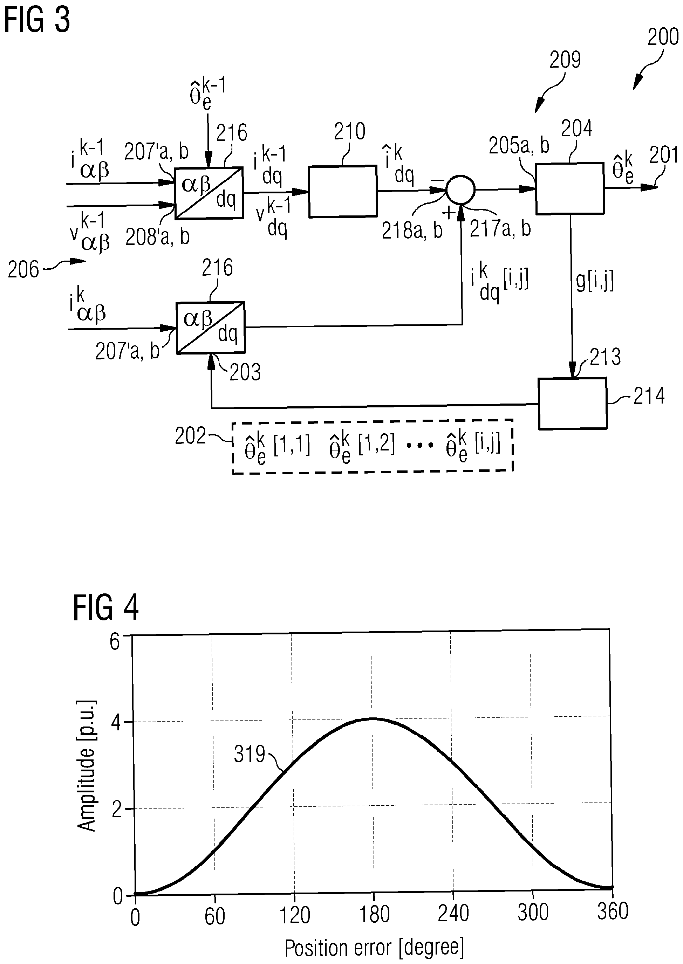

In contrast thereto, the arrangement 200, illustrated in **Fig. 3,** for determining the electrical rotor position value 201 of an electrical synchronous machine provides an embodiment of the present invention where the currents are calculated or modelled in the rotating dq-reference frame.

It should be understood that features similar in structure and/or function in the different Figs. 1 and 3 are labelled with reference signs only differing in the first digit. A description of one element not described in detail with respect to a particular embodiment can be taken from the description of the corresponding element in the other embodiment or figure.

Also the arrangement 200 comprises an electronic storage 202, which is adapted to store candidate values Θ_e[i] also labelled with reference sign 203. Further the arrangement 200 comprises an input port 206 adapted to receive plural stator winding current component values 207'a, 207'b (relating to a previous time instance k-1), to receive plural current component values 207a, 207b (relating to current time instance k) and to receive plural stator winding voltage component values 208'a, 208'b (relating to a previous time instance k-1).

The arrangement 200 further comprises the processor 209 comprising plural functional modules or blocks which is adapted to calculate, using a current model 210, for each of the candidate values 203 associated components 205a, 205b of an error of a stator current based on the plural current component values 207'a, 207'b, 207a, 207b and the plural voltage component values 208'a, 208'b.

Further, the arrangement comprises a module 204 providing a cost function being a real-valued function of the components 205a, 205b of the error of the current. The processor 209 is adapted to assess the candidate values 203 using the cost function, as is provided by the module 204. The processor is further adapted to define the actual electrical rotor position value 201 based on the assessment.

The cost function module 204 outputs the value of the cost function g[i,j] also denoted with reference sign 213, which is provided to a searching strategy module 214. The searching strategy may, similarly as described with reference to Fig. 1 comprise an iterative refinement process.

In the embodiment illustrated in Fig. 3 the plural current component values and voltage component values 207'a, 207'b, 208'a, 208'b and also 207a, 207b are transformed from the alpha-beta frame to the dq-frame by means of a transformation modules 216. The transformation may for example be according to the equations (2) given above. The transformation module 216 outputs the respective current component values in the dq-frame and provides them to the current model 210. The current model 210 may implement the equation (15) listed above and outputs the predicted current component values 218a,b for a current time instance.

From the measured and transformed current component values 217a, 217b which are derived by another transformation module 216 from the input current component values 207a, 207b, the predicted current component values 218a, 218b as output by the current model 210 are subtracted in order to derive the errors of the current components 205a, 205b.

In the arrangement 200 (implementing a current model based FPS observer in the estimated rotating reference frame) the following equations may partly or entirely be implemented or applied:
The measured current in the estimated reference frame is expressed as:

$$\begin{bmatrix} \hat{i}_d^k \\ \hat{i}_q^k \end{bmatrix} = \begin{bmatrix} \hat{i}_d^{k-1} \\ \hat{i}_q^{k-1} \end{bmatrix} + \begin{bmatrix} \dfrac{T_s}{L_d} & 0 \\ 0 & \dfrac{T_s}{L_q} \end{bmatrix} \left\{ \begin{bmatrix} \hat{v}_d^{k-1} \\ \hat{v}_q^{k-1} \end{bmatrix} - \left( \begin{bmatrix} R_s & -\omega_e L_q \\ \omega_e L_d & R_s \end{bmatrix} \begin{bmatrix} \hat{i}_d^{k-1} \\ \hat{i}_q^{k-1} \end{bmatrix} + \omega_e \psi_m \begin{bmatrix} -\sin\Delta\theta \\ \cos\Delta\theta \end{bmatrix} \right) \right\}$$

$$(14)$$

Then, the predicted current is obtained based on the measured current in the past sample instant, which is given by:

$$\begin{bmatrix} \hat{i}_{d,p}^k \\ \hat{i}_{q,p}^k \end{bmatrix} = \begin{bmatrix} \hat{i}_d^{k-1} \\ \hat{i}_q^{k-1} \end{bmatrix} + \begin{bmatrix} \dfrac{T_s}{L_d} & 0 \\ 0 & \dfrac{T_s}{L_q} \end{bmatrix} \left\{ \begin{bmatrix} \hat{v}_d^{k-1} \\ \hat{v}_q^{k-1} \end{bmatrix} - \left( \begin{bmatrix} R_s & -\omega_e L_q \\ \omega_e L_d & R_s \end{bmatrix} \begin{bmatrix} \hat{i}_d^{k-1} \\ \hat{i}_q^{k-1} \end{bmatrix} + \begin{bmatrix} 0 \\ \omega_e \psi_m \end{bmatrix} \right) \right\}$$

$$(15)$$

**EP 4 475 425 A1**

Therefore, the difference between the predicted current and measured current can be derived as:

$$\begin{bmatrix} \hat{i}_d^k \\ \hat{i}_q^k \end{bmatrix} - \begin{bmatrix} \hat{i}_d^k \\ \hat{i}_q^k \end{bmatrix} = \begin{bmatrix} \dfrac{T_s}{L_d} & 0 \\ 0 & \dfrac{T_s}{L_q} \end{bmatrix} \omega_e \Psi_m \begin{bmatrix} \sin \Delta\theta \\ 1 - \cos \Delta\theta \end{bmatrix} \tag{16}$$

The cost function provide by block 204 in Fig. 3 is designed as:

$$g_{CM2} = \left( \hat{i}_d^k - \hat{i}_{d,p}^k \right)^2 + \left( \hat{i}_q^k - \hat{i}_{q,p}^k \right)^2 \tag{17}$$

**Fig. 4** illustrates in a coordinate system having as an abscissa the position error as an ordinate the amplitude, a graph of a cost function according to equation 17 which may be implemented by the cost function module 204 illustrated in Fig. 3. The cost function g_cm2 is illustrated as a curve 319 in Fig. 4. Also this cost function g_cm2 exhibits only one single minimum for the position error of 0°.

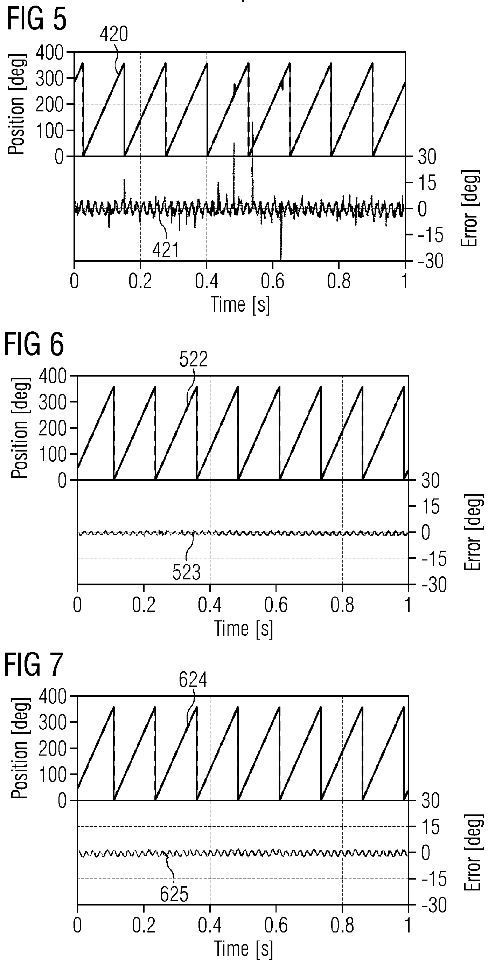

**Figs. 5, 6, 7** illustrate simulation results in coordinate frames having as abscissa the time and having as an ordinate the rotor position or the error of the rotor position in steady-state.

The curve 420 in Fig. 5 illustrates the determined position determined by a conventional method and the curve 421 in Fig. 5 illustrates the position error as observed for the conventional method.

The curves 522, 523 in Fig. 6 illustrate the rotor position and the error of the rotor position, respectively when the arrangement 100 is utilized to determine the electrical rotor position, i.e. thereby estimating the rotor position in the rotating reference frame.

The curves 624, 625 in Fig. 7 illustrate the determined rotor position and the error of the rotor position, respectively, when the arrangement 200 illustrated in Fig. 3 is utilized to determine the rotor position, i.e. when the position is calculated in the stationary reference frame.

As can be observed from the curves 523, 625 in Figs. 6 and 7, the error of the rotor position determination is less than for the conventional example represented by curve 421 in Fig. 5.

With the proposed current model based FPS observers, the current derivative operation can be avoided and the estimation becomes insensitive to noises and harmonics. Clearly, with the proposed method, the noises and harmonics in the position error are effectively suppressed.

Embodiments of the present invention may provide the following embodiments or features and/or advantages:

1) Two current model based finite-position-set position observers in estimated rotating and stationary reference frames are proposed.

2) Position estimation accuracy enhancement: A new cost function is designed to estimate the rotor position and eliminate the ambiguity of position error $\pi$ in the conventional methods.

3) Current derivative calculation: the current derivative calculation is avoided in the proposed method, which effectively reduces the high frequency noises and harmonics in the position estimation.

4) With these improvements, this high bandwidth FPS observer becomes feasible and reliable for a practical implementation purpose. Once it is reliable to use, its high bandwidth advantage can help to increase the control bandwidth of the overall system.

F**ig. 8** schematically illustrates a wind turbine 1350 according to an embodiment of the present invention. The wind turbine 1350 comprises a wind turbine tower 1351 and a nacelle 1352 mounted on top of the tower 1351. The nacelle 1352 harbours a rotation shaft 1353 at which (in particular via a hub 1354) plural rotor blades 1355 are mounted. The rotor hub 1354 is via the rotor shaft 1353 mechanically coupled to a rotor 1356 of an electrical synchronous machine system 1360 according to an embodiment of the present invention.

The electrical synchronous machine system 1360 comprises an electrical synchronous machine 1361 having the rotor 1356 and a stator 1362 with stator windings (not in detail illustrated).

The electrical synchronous machine system 1360 further comprises an arrangement 1300 which may for example be configured as the arrangements 100, 200 illustrated in Figs. 1 or 2 which is connected to receive measurement values 1303a,b of the electrical machine 1361 and in particular also connected to control the electrical machine 1361. In the illustrated embodiment, the control of the arrangement 1300 is via control signals 1363 which are supplied to a converter 1364 which is connected to the electrical machine 1361. The converter output terminals are connected to a utility grid 1365.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1.  Method of determining an electrical rotor position value (101) of an electrical, in particular permanent magnet, synchronous machine (1361) having a stator (1362) with stator windings, the method comprising:

    using a current model (110) of the machine, to calculate an error (105a,b) of a current for at least one candidate value (103) of the electrical rotor position;
    assessing the candidate value (103) using a cost function (g_CM1, g_CM2); and
    defining the actual electrical rotor position value (101) based on the assessment.

2.  Method according to the preceding claim, further comprising:

    providing plural candidate values (103) for the electrical rotor position;
    providing current component values (107'a,b, 107a,b) and voltage component values (108a,b) relating to the stator windings;
    calculating, using the current model (110) of the machine, in particular using a set of equations (11, 12;15, 16), for each of the candidate values, associated components (105a,b) of the error of a current based on the plural current component values (107'a,b, 107a,b) and plural voltage component values (108a,b);
    providing the cost function (g_CM1, g_CM2) being a real valued function of the components (105a,b) of the error of the current;
    assessing the candidate values (103) using the cost function; and
    defining the actual electrical rotor position value (101) based on the assessment.

3.  Method according to the preceding claim, wherein the current model (110) enables to calculate predicted current components (111a,b) at a time instance based on the provided current components (107'a,b) at a previous time instance, the provided voltage components (108a,b) at the previous time instance and an estimated back-EMF (E) at the time instance, wherein for calculating the estimated back-EMF a voltage model is used.

4.  Method according to the preceding claim,

    wherein the cost function (g_CM1, g_CM2) evaluates to two different values if an error of the electrical rotor position value is zero or pi and/or
    wherein the cost function (g_CM1, g_CM2) has a single minimum for an error of the electrical rotor position value being zero.

5.  Method according to one of the preceding claims,
    wherein the cost function (g_CM1, g_CM2) depends on one of:

    a d-component (205a) and a q-component (205b) of the error of the current, in particular a sum of squares of those error components;
    an alpha-component (105a) and a beta-component (105b) of the errors of the current, in particular a sum of squares of those error components.

6.  Method according to one of the preceding claims,
    wherein the error of the current depends on a difference of the provided current (107a,b; 217a,b) and a current (111a,b; 218a,b) estimated or predicted based on the respective candidate value (103, 203) of the electrical rotor position using the current model.

7.  Method according to one of the preceding claims, wherein defining a value as the actual electrical rotor position value based on the assessment comprises:

    defining a value as the actual electrical rotor position value, in particular in an iterative fashion, to be within an interval limited by those two candidate values in each iteration step which leads to two minimal values of the cost function.

8. Method according to one of the preceding claims, wherein selecting a value as the actual electrical rotor position value based on the assessment comprises:

   a first stage in which two candidate values from plural initial candidate values, in particular evenly distributed in an angle interval having width of 360°, are selected which leads to the two smallest values of the cost function;
   a second stage, in which it is iteratively performed:

   determining a mid position between the two previous candidate values;
   selecting, among the two previous candidate values and the mid position, those two as next candidate values which result in the two smallest cost function values.

9. Method according to the preceding claim,

   wherein the iteration is terminated after a predetermined number of iterations and/or
   wherein the actual electrical rotor position value is set to this candidate value which evaluates to the smallest cost function value in the last iteration step.

10. Method according to one of the preceding claims,

    wherein the current component values (107'a,b, 107a,b) and/or voltage component values (108'a,b) are components in dq-frame or alpha-beta-frame; and/or
    wherein the current component values are measured values and/or the voltage component values are reference values.

11. Method according to one of the preceding claims, wherein the electrical machine comprises a generator (1361) of a wind turbine (1350).

12. Method of controlling an electrical, in particular permanent magnet, synchronous machine (1361) having a stator (1362) with stator windings, the method comprising:

    performing a method according to one of the preceding claims;
    controlling, in particular comprising vector control, the electrical machine (1361) based on the determined rotor position value (101).

13. Arrangement (100) for determining an electrical rotor position value (101) of an electrical, in particular permanent magnet, synchronous machine (1361) having a stator (1362) with stator windings, the arrangement comprising:

    a processor (209) adapted:

    to use a current model (210) of the machine, to calculate an error (105a,b) of a current for at least one candidate value (103) of the electrical rotor position;
    to assess the candidate value (103) using a cost function (g_CM1, g_CM2); and
    to define the actual electrical rotor position value (101) based on the assessment,

    the arrangement in particular further comprising:

    an electronic storage (102) adapted to store plural candidate values (103) for the electrical rotor position;
    a module (104) providing the cost function (g_CM1, g_CM2) being a real valued function of the components of the error (105a,b) of the current;
    an input port (106) for receiving plural stator winding current component values (107'a,b, 107a,b) and plural stator winding voltage component values (108a,b);

    wherein the processor (209) is in particular adapted to calculate, using the current model (110) of the machine, in particular using a set of equations (11, 12;15, 16), for each of the candidate values (103), associated components (105a,b) of an error of a current based on the plural current component values and plural voltage component values;

the processor (209) being in particular further adapted:

to assess the candidate values (103) using the cost function (g_CM1, g_CM2); and
to define the actual electrical rotor position value (101) based on the assessment.

14. Electrical synchronous machine system (1360), comprising:

an electrical, in particular permanent magnet, synchronous machine (1361) having a rotor (1356) and a stator (1362) with stator windings; and
an arrangement (1300) according to the preceding claim connected to receive measurement values of the electrical machine, in particular connected to control the electrical machine.

15. Wind turbine (1350), comprising:

a rotor hub (1354) having plural rotor blades (1355) mounted;
an electrical synchronous machine system (1361), whose rotor (1356) is coupled to the rotor hub (1354).

## FIG 1

$i_{\alpha\beta}^{k}$    107a, b

106

$i_{\alpha\beta}^{k-1}$   107'a, b   110

$v_{\alpha\beta}^{k-1}$   108'a, b   103

$\hat{i}_{\alpha\beta, p}^{k}[i, j]$

111a, b

105a, b

112

109

104

$\hat{\theta}_{e}^{k}$   101

g[i, j]

113

114

102   $\hat{\theta}_{e}^{k}[1,1]$   $\hat{\theta}_{e}^{k}[1,2]$   $\cdots$   $\hat{\theta}_{e}^{k}[i,j]$

100

## FIG 2

115

Amplitude [p.u.]

Position error [degree]

## FIG 3

## FIG 4

FIG 5

FIG 6

FIG 7

FIG 8

1350

1355

1362

1356

1303a, b

1300

1353

1363

1352

1354

1361

1364

1356

1360

1351

1365

Europäisches Patentamt

European Patent Office

Office européen des brevets

# EUROPEAN SEARCH REPORT

Application Number

EP 23 17 7522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 886 880 A (UNIV NANTONG) 1 June 2021 (2021-06-01) | 1,5,6, 10,12-14 | INV. H02P21/18 |
| Y | * paragraph [0017]; figure 1 * <br> * paragraph [0017] * <br> * claim 4 * <br> * claim 5 * <br> * paragraph [0054] * <br> * paragraph [0002] * <br> * paragraph [0022] * | 7-9 | |
| X | CHEN SHUO ET AL: "Sensorless Control of PMSM Drives Using Quasi Resonant Internal Model-Based Extended State Observer and Newton-Raphson Method Based Phase-Locked Loop", 2021 IEEE 2ND CHINA INTERNATIONAL YOUTH CONFERENCE ON ELECTRICAL ENGINEERING (CIYCEE), IEEE, 15 December 2021 (2021-12-15), pages 1-7, XP034071016, DOI: 10.1109/CIYCEE53554.2021.9676860 [retrieved on 2022-01-10] | 1-4,13 | |
| Y | * page 2, left-hand column, paragraph first * <br> * page 2, left-hand column, last paragraph * <br> * page 4, left-hand column, last paragraph * <br> * page 4, right-hand column; figure 7 * | 11,15 | TECHNICAL FIELDS SEARCHED (IPC) H02P |

-/--

The present search report has been drawn up for all claims

| Place of search | Date of completion of the search | Examiner |
|---|---|---|
| Munich | 25 October 2023 | Fligl, Stanislav |

EPO FORM 1503 03.82 (P04C01)

Europäisches
Patentamt

European
Patent Office

Office européen
des brevets

# EUROPEAN SEARCH REPORT

Application Number

EP 23 17 7522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DARBA ARAZ ET AL: "Improved Dynamic Behavior in BLDC Drives Using Model Predictive Speed and Current Control", IEEE TRANSACTIONS ON INDUSTRIAL ELECTRONICS, IEEE SERVICE CENTER, PISCATAWAY, NJ, USA, vol. 63, no. 2, February 2016 (2016-02), pages 728-740, XP011591251, ISSN: 0278-0046, DOI: 10.1109/TIE.2015.2477262 [retrieved on 2016-01-08] * page 735, right-hand column, paragraph next to last * * page 735, right-hand column, paragraph first – paragraph third * | 7-9 | |
| Y | ABDELRAHEM MOHAMED ET AL: "Computationally Efficient Finite-Position-Set-Phase-Locked Loop for Sensorless Control of PMSGs in Wind Turbine Applications", IEEE TRANSACTIONS ON POWER ELECTRONICS, INSTITUTE OF ELECTRICAL AND ELECTRONICS ENGINEERS, USA, vol. 36, no. 3, 11 August 2020 (2020-08-11), pages 3007-3016, XP011817165, ISSN: 0885-8993, DOI: 10.1109/TPEL.2020.3015575 [retrieved on 2020-10-26] * paragraph [title]; figure 3 * | 11,15 | TECHNICAL FIELDS SEARCHED (IPC) |

The present search report has been drawn up for all claims

| Place of search | Date of completion of the search | Examiner |
|---|---|---|
| Munich | 25 October 2023 | Fligl, Stanislav |

EPO FORM 1503 03.82 (P04C01)

page 2 of 2

**ANNEX TO THE EUROPEAN SEARCH REPORT
ON EUROPEAN PATENT APPLICATION NO.** EP 23 17 7522

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2023

| Patent document cited in search report | Publication date | Patent family member(s) | Publication date |
|---|---|---|---|
| CN 112886880 A | 01-06-2021 | NONE | |

For more details about this annex : see Official Journal of the European Patent Office, No. 12/82